# EUROPÄISCHE PATENTANMELDUNG

(11) **EP 1 067 634 A2**
(43) Veröffentlichungstag der Anmeldung: **10.01.2001**
(21) Anmeldenummer: 00114511.9
(22) Anmeldetag: 06.07.2000
(51) Int. Cl.: H01R 13/627, H01R 13/642, H01R 13/66

(54) **Diodenhaltevorrichtung**

(30) Priorität: 06.07.1999 DE 19931121
(71) Anmelder: TYCO Electronics Logistics AG, 9323 Steinach (CH)
(72) Erfinder: Reifel, Dirk, 76297 Stutensee (DE); Ferstl, Michael, 93047 Regensburg (DE); Buck, Carsten, 64646 Heppenheim (DE); Hamburger, Andreas, 76726 Germersheim (DE)
(74) Vertreter: Heinz-Schäfer, Marion

(57) **Zusammenfassung**

Eine erfindungsgemäße Diodenhaltevorrichtung, die insbesondere für einen optischen Steckverbinder (4) vorgesehen ist, hat ein Diodengehäuse (1), wobei dieses Diodengehäuse (1) zumindest ein Befestigungs- und/oder Positionierelement (2, 6) einstückig aufweist, welches im Zusammenwirken mit zumindest einer Rasteinrichtung (3) an dem optischen Steckverbinder (4) einen ausgerichteten Eingriff zwischen dem Diodengehäuse (1) und dem optischen Steckverbinder (4) herstellt.

## Beschreibung

Die vorliegende Erfindung betrifft eine Diodenhaltevorrichtung gemäß dem Oberbegriff des Patentanspruchs 1.

Eine bekannte Diodenhaltevorrichtung wird dadurch verwirklicht, daß eine Diode auf einem Steckverbinder, d.h. auf einer Stift- oder Buchsenleiste ausgerichtet und befestigt wird. Die Befestigung erfolgt mittels Kleben, Verprägen, Heißverstemmen, Laserschweißen oder einem ähnlichen Verfahren.

Wegen der ungenauen Außengeometrie der Dioden ist die Montage und die Positionierung der Dioden in einem optischen Steckverbinder somit problematisch. Diese ungenaue Außengeometrie der Diode tritt auf, da bei der Diode das optisch aktive Bauelement lediglich mit einem transparenten Harz in einer einfachen Gießform umgossen wird.

Infolge der oben genannten Verfahren zum Befestigung der Diode kann diese nicht mehr lösbare Befestigung beim Ausfall der Diode nur durch einen kompletten Austausch des Steckverbinders repariert werden.

Demgegenüber ist es die Aufgabe der vorliegenden Erfindung, eine Diodenhaltevorrichtung zu schaffen, die eine ausgerichtete Befestigung und exakte Positionierung der Diode bzw. des Diodengehäuses erlaubt. Gleichzeitig soll diese Befestigung eine einfache Montage der Diode an einem optischen Steckverbinder ermöglichen.

Diese Aufgabe wird durch eine Diodenhaltevorrichtung gemäß dem kennzeichnenden Teil des Patentanspruchs 1 gelöst.

Demnach umfaßt die Diodenhaltevorrichtung, die insbesondere für einen optischen Steckverbinder vorgesehen ist, ein Diodengehäuse, wobei dieses Diodengehäuse zumindest ein Befestigungs- und/oder Positionierelement einstückig aufweist, welches im Zusammenwirken mit zumindest einer Rasteinrichtung an dem optischen Steckverbinder einen ausgerichteten Eingriff zwischen dem Diodengehäuse und dem optischen Steckverbinder herstellt.

Mit einer solchen Ausbildung der Diodenhaltevorrichtung erfolgt die einfache und exakte Positionierung und Befestigung des Diodengehäuses auf einem optischen Steckverbinder mittels dem Befestigungs- und/oder Positionierelement.

Eine einfache Montage ist gewährleistet. Die lösbare Befestigung ermöglicht zudem den Austausch einer defekten Diode.

Vorteilhafte Weiterbildungen der erfindungsgemäßen Diodenhaltevorrichtung sind der Gegenstand von Unteransprüchen.

Die vorliegende Diodenhaltevorrichtung wird im folgenden unter Bezugnahme auf die zugehörigen Zeichnungen näher erläutert.

In den Zeichnungen zeigt:
Fig. 1 eine perspektivische Ansicht einer erfindungsgemäßen Diodenhaltevorrichtung mit einem Steckverbinder für einen LWL (Lichtwellenleiter) gemäß einer ersten bevorzugten Ausführungsform nach der vorliegenden Erfindung;
Fig. 2 eine weitere perspektivische Ansicht der Diodenhaltevorrichtung nach der Figur 1;
Fig. 3 eine perspektivische Ansicht einer erfindungsgemäßen Diodenhaltevorrichtung mit einem Steckverbinder für einen LWL (Lichtwellenleiter) gemäß einer zweiten bevorzugten Ausführungsform nach der vorliegenden Erfindung;
Fig. 4 die Diodenhaltevorrichtung nach der Figur 3, mit dem eingerasteten Steckverbinder;
Fig. 5 eine Querschnittansicht und eine Draufsicht auf die Diodenhaltevorrichtung mit Steckverbinder nach den Figuren 3 und 4;
Fig. 6 eine Explosionsdarstellung der Diodenhaltevorrichtung, des Steckverbinders und eines Einsatzes für einen LWL nach der zweiten Ausführungsform; und
Fig. 7 die Diodenhaltevorrichtung mit Steckverbinder und Einsatz gemäß der Figur 6 im zusammengebauten Zustand.

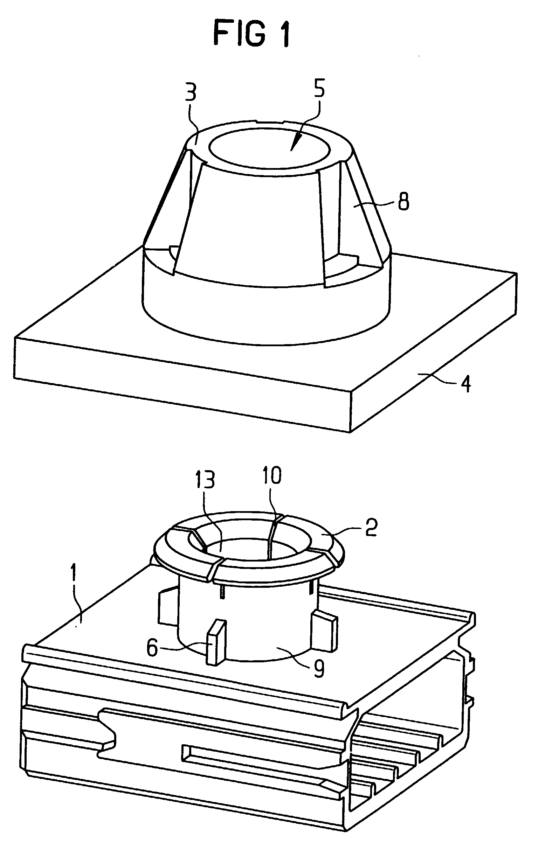

In der Figur 1 ist eine Diodenhaltevorrichtung nach einer ersten bevorzugten Ausführungsform nach der vorliegenden Erfindung dargestellt, wobei die Diodenhaltevorrichtung ein Diodengehäuse 1 aufweist, welches einstückig damit ausgebildet Elemente zum Befestigen und Positionieren des Diodengehäuses an einem optischen Steckverbinder 4 umfaßt. Diese Elemente sind bei der vorliegenden Ausführungsform, die in den Zeichnungen dargestellt ist, am Diodengehäuse 1 oben liegend vorgesehen. Zum einen ist ein Befestigungselement 2 in Form einer Ringschnappeinrichtung ausgebildet, nämlich am oberen (in der Figur 1) Ende eines zylindrischen Fortsatzes 9 des Diodengehäuses 1, und zwar in Form eines umlaufenden und überstehenden Bundes, der über vier Einschnitte 10 verfügt, um eine Elastizität und damit Verformbarkeit des Bundes sicher zu stellen.

Zum anderen ist eine Mehrzahl von Positionierelementen 6 am Umfang des zylindrischen Fortsatzes 11 im unteren Bereich vorgesehen.

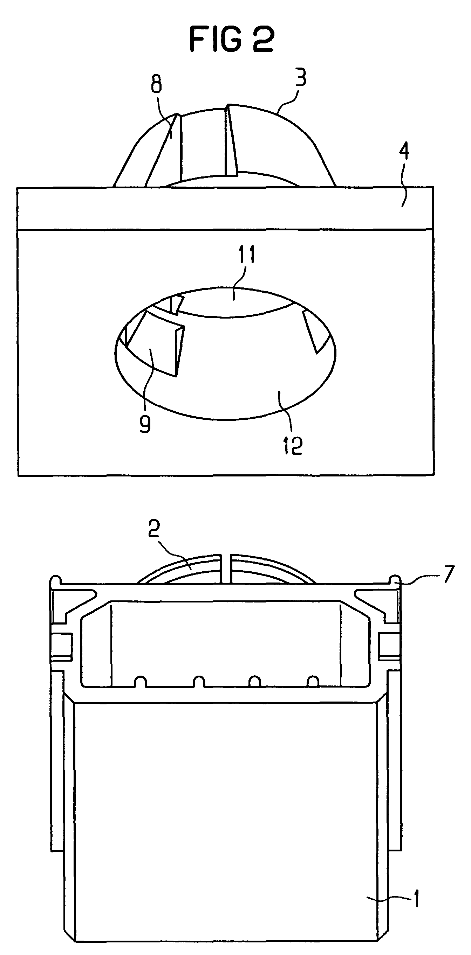

Beim Einstecken des Diodengehäuses 1 in einen optischen Steckverbinder 4 gelangen die Positionierabschnitte 6 in Eingriff mit einer umlaufenden Wandung 12 (Fig. 2) und zentrieren das Diodengehäuse 1 relativ zu einer Öffnung 11 in dem Steckverbinder 4.

Eine Rasteinrichtung 3 gelangt beim Einstecken des Diodengehäuses 1 in den Steckverbinder 4 derart mit dem Bund des Befestigungselementes 2 in Eingriff, daß der Bund die Rasteinrichtung 3 übergreift. Hierzu muß der Bund radial zusammengedrückt werden, was infolge der Einschnitte 10 möglich ist. Dann federt der Bund in seine Ausgangslage zurück und übergreift die Endfläche der Rasteinrichtung 3. Hierdurch wird die Positionierung des Diodengehäuses 1 relativ zum Steckvebinder 4 in axialer Richtung festgelegt.

Die radiale Positionierung von Diodengehäuse 1 und Steckverbinder 4 übernehmen die Positionierelemente 6, die einen Eingriff zwischen der Außenfläche der Positionierelemente 6 und der Innenwand bzw. Wandung 12 der Öffnung 11 herstellen.

Das Diodengehäuse 1 läßt sich im Spritzgußverfahren einstückig mit allen wesentlichen Funktionselementen bzw. Funktionsflächen herstellen, wobei diese Herstellung kostengünstig und einfach ist.

In den LWL-Anschluß 5 wird ein Insert oder eine Ferrule zum Anschluß eines Lichtwellenleiters (nicht dargestellt) eingesteckt.

Bei der vorliegenden Ausführungsform ist die Rasteinrichtung 3 und der Bund des Befestigungselements 2 gleichmäßig am Umfang der Öffnung 11 bzw. 13 vorgesehen. Die Positionierelemente 6 sind ebenfalls gleichmäßig am Umfang des zylindrischen Fortsatzes 11 vorgesehen; eine andere Aufteilung dieser Funktionsbauteile am Umfang der Öffnungen ist jedoch auch denkbar.

Die Verbindung zwischen dem Diodengehäuse 1 und dem optischen Steckverbinder 4 erfolgt also mittels einer Verrastung. Nach dem Einstecken ist das Diodengehäuse 1 nicht ohne ein Entriegelungswerkzeug herausnehmbar. Die Kräfte, die das Diodengehäuse 1 aufnehmen kann, insbesondere die axialen Kräfte, zum Beispiel beim Einstecken des Einsatzes des Lichtwellenleiters in den LWL-Anschluß 5, werden über die Rasteinrichtung 3 und den Bund des Befestigungselementes 2 weitergeleitet und aufgenommen.

Soll die Steckverbindung nicht mehr lösbar sein, so kann zusätzlich ein Verkleben, Verschweißen oder ein ähnliches Verfahren eingesetzt werden, wobei dann der Vorteil der Austauschbarkeit der Diode entfällt. Trotzdem bleibt die einfache und exakte Positionierung durch die erfindungsgemäße Diodenhaltevorrichtung erhalten.

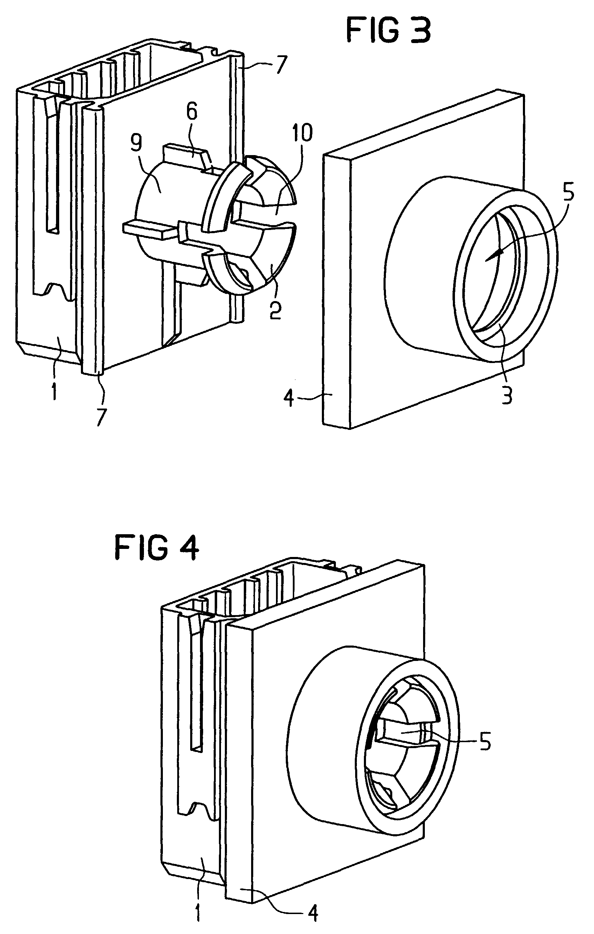

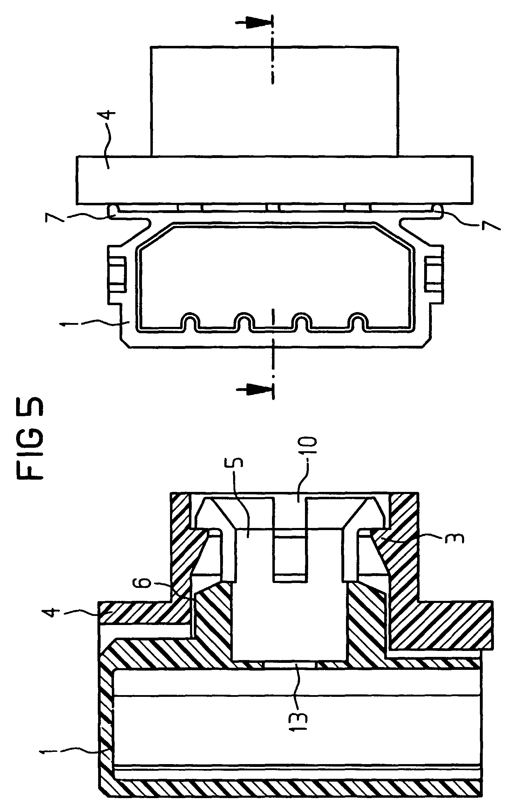

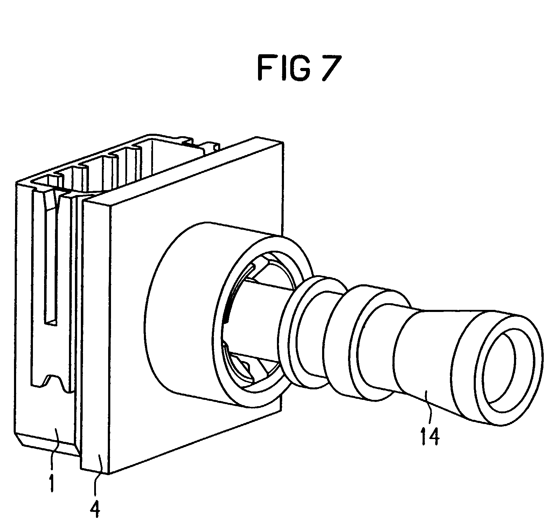

In den Figuren 3 bis 7 ist eine zweite bevorzugte Ausführungsform nach der vorliegenden Erfindung dargestellt. Dort ist der optische Steckverbinder 4 ebenfalls mit einem plattenförmigen Grundkörper und mit einem daran mittig aufgesetzten, hohlzylindrischen Fortsatz ausgebildet. In dem hohlzylindrischen Fortsatz befindet sich die Rasteinrichtung 3, die als umlaufender Bund vorgesehen ist. Diese Rasteinrichtung 3 gelangt beim Ineinanderstecken des Diodengehäuses 1 und des Steckverbinders 4 mit dem Befestigungselement 2 am Fortsatz 9 des Diodengehäuses 1 in Eingriff, wie dies in der Figur 4 zu erkennen ist.

Die in den Figuren 3 bis 7 gezeigten Bauteile, die den Bauteilen in den Figuren 1 und 2 entsprechen, weisen die gleichen Bezugszeichen auf.

Die Einschnitte 10 bei der zweiten Ausführungsform sind breiter ausgeführt, verglichen mit der ersten Ausführungsform, so daß das Einführen und Verrasten des Steckverbinders 4 einfacher zu bewerkstelligen ist.

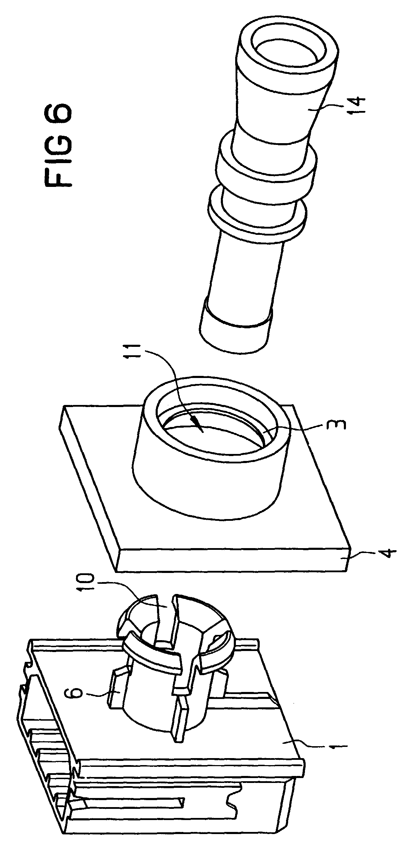

Um eine dennoch ausreichende Sicherung der Verrastung zu gewährleisten, ist ein Insert 14 (Einsatz bzw. Ferrule) vorgesehen, der in die Öffnung 11 im Steckverbinder 4 eingeführt wird, wie es in der Figur 6 dargestellt ist. Sobald der Insert 14 eingesetzt ist, läßt sich die Verrastung zwischen dem Diodengehäuse 1 und dem Steckverbinder 4 nicht mehr lösen.

Auch bei der zweiten Ausführungsform dienen die Positionierelemente 6 der mittigen, konzentrischen Ausrichtung der beiden Bauteile (Diodengehäuse 1 und Steckverbinder 4). Die Toleranzausgleichseinrichtung 7 ist ebenfalls am Gehäuse vorgesehen; insoweit wird auf die obigen Beschreibung verwiesen.

Bezüglich weiterer Merkmale und Vorteile der erfindungsgemäßen Diodenhaltevorrichtung wird auf die beigefügten Ansprüche und Zeichnungen verwiesen.

## Patentansprüche

1. Diodenhaltevorrichtung, insbesondere für einen optischen Steckverbinder (4), mit einem Diodengehäuse (1),
**dadurch gekennzeichnet,** daß
das Diodengehäuse (1) zumindest ein Befestigungs- und/oder Positionierelement (2, 6) einstückig aufweist, welches im Zusammenwirken mit zumindest einer Rasteinrichtung (3) an dem optischen Steckverbinder (4) einen ausgerichteten Eingriff zwischen dem Diodengehäuse (1) und dem optischen Steckverbinder (4) herstellt.

2. Diodenhaltevorrichtung nach Anspruch 1,
**dadurch gekennzeichnet,** daß
das Befestigungs- und/oder Positionierelement (2, 6) als eine Einheit aus einer Ringschnappeinrichtung und zumindest einem Positionierabschnitt ausgebildet ist.

3. Diodenhaltevorrichtung nach Anspruch 1 oder 2,
**dadurch gekennzeichnet,** daß
eine Toleranzausgleichseinrichtung (7) am Diodengehäuse (1) vorgesehen ist, die das für die Verrastung erforderliche Spiel ausgleicht.

4. Diodenhaltevorrichtung nach Anspruch 3,
**dadurch gekennzeichnet,** daß
die Toleranzausgleichseinrichtung (7) an dem Diodengehäuse (1) als Federelement ausgebildet ist, welches das axiale Spiel zwischen Diodengehäuse (1) und Steckverbinder (4) minimiert.

5. Diodenhaltevorrichtung nach einem der Ansprüche 1 bis 4,
**dadurch gekennzeichnet,** daß
die Verrastung lösbar ausgebildet ist.

6. Diodenhaltevorrichtung nach einem der Ansprüche 1 bis 5,
**dadurch gekennzeichnet,** daß
das Diodengehäuse (1) an dem optischen Steckverbinder (4) zusätzlich befestigt wird.

7. Diodenhaltevorrichtung nach Anspruch 6,
**dadurch gekennzeichnet,** daß
die zusätzliche Befestigung mittels Kleben, Schweißen, Heißverstemmen etc. erfolgt.
